# EUROPÄISCHE PATENTSCHRIFT

(11) **EP 2 719 601 B1**
(45) Veröffentlichungstag und Bekanntmachung des Hinweises auf die Patenterteilung: **09.09.2015**
(21) Anmeldenummer: 13187294.7
(22) Anmeldetag: 04.10.2013
(51) Int. Cl.: B62B 3/06, B66F 9/065, B66F 9/12

(54) **Flurförderzeug, insbesondere Hubwagen**
Industrial truck, in particular jack lift
Chariot de manutention, en particulier chariot élévateur

(30) Priorität: 15.10.2012 DE 102012109788; 17.01.2013 DE 102013100464
(43) Veröffentlichungstag der Anmeldung: 16.04.2014
(73) Patentinhaber: OM Carrelli Elevatori S.p.A., 20020 Lainate (MI) (IT)
(72) Erfinder: Mariotti, Fabio, 42016 Guastalla (IT)
(74) Vertreter: Geirhos, Johann

(56) Entgegenhaltungen:
- DE-A1-102004 057 777
- FR-A1- 2 598 142
- GB-A- 622 670

## Beschreibung

Die Erfindung betrifft ein Flurförderzeug, insbesondere Hubwagen, mit einem Antriebsteil und einem relativ zum Antriebsteil anhebbaren Lastteil, wobei der Lastteil zumindest einen Radarm aufweist, der mit mindestens einer Lastrolle versehen ist, wobei zum Anheben des Radarms ein mit der Lastrolle in Wirkverbindung stehendes Gestänge und eine das Gestänge betätigende Hebelanordnung vorgesehen ist, wobei die Hebelanordnung einen ersten Hebel, der mit einem ersten Lagerpunkt an dem Antriebsteil schwenkbar gelagert ist und mit einem zweiten Lagerpunkt an dem Lastteil schwenkbar gelagert ist, und einen zweiten Hebel aufweist, der mit einem Lagerpunkt an dem Lastteil schwenkbar gelagert ist und mit einem Koppelpunkt mit dem Gestänge gekoppelt ist.

Bekannte Flurförderzeuge mit Radarmen dienen dazu, mit den Radarmen unter eine Palette zu fahren und die Palette anzuheben. Zum Anheben der Palette werden die Radarme angehoben. Hierzu wird der Lastteil relativ zu dem Antriebsteil angehoben, wobei schwenkbar an den Radarmen angeordnete Radarmhebel, in denen die Lastrollen gelagert sind, über die Hebelanordnung und die Gestänge betätigt werden, um die Radarme anzuheben. Eine derartige Hubbewegung wird bei Niederhubwagen bzw. Kommissionieren als Niederhub bezeichnet bzw. bei Hochhubwagen mit einem zusätzlichen Hubgerüst als Initialhub.

Ein gattungsgemäßer Hubwagen ist aus der DE 10 2004 057 777 A1 bekannt. Die Hebelanordnung zur Betätigung der mit den Radarmhebeln in Verbindung stehenden Gestänge besteht aus zwei Parallelogrammhebeln. Ein oberer, erster Parallelogrammhebel ist mit einem ersten Lagerpunkt an dem Antriebsteil schwenkbar gelagert und mit einem zweiten Lagerpunkt an dem Lastteil schwenkbar gelagert. Ein unterer, zweiter Parallelogrammhebel ist mit einem Lagerpunkt an dem Lastteil schwenkbar gelagert ist und mit einem Koppelpunkt mit dem Gestänge gekoppelt. Der untere, zweite Parallelogrammhebel ist an einem weiteren Lagerpunkt weiterhin an dem Antriebsteil schwenkbar gelagert.

Hubwagen mit Lastrollen an den Radarmen, die mittels eines Gestänges und einer Hebelanordnung betätigt werden, sind beispielsweise aus der EP 1 690 823 B1 oder der DE 10 2009 033 709 A1 bekannt. Bei bekannten Hubwagen besteht die Hebelanordnung aus einem am Lastteil schwenkbar gelagerten Umlenkhebel, der weiterhin am Antriebsteil gelagert oder abgestützt ist und mit dem Gestänge gekoppelt ist. Bekannte Hebelanordnung führen bei einer Hub- bzw. Schwenkbewegung zu einem Verschwenken des als Zugstange oder Druckstange ausgebildeten Gestänges, bei dem die Gestänge je nach konstruktiver Ausführungsform aus den Umrissen der Radarme nach unten austauchen. Bekannte Hubwagen sind für die Handhabung von standardisierten Europlatten ausgeführt, die eine Einfahrhöhe für die Radarme von 100mm aufweisen und hierzu in der vollständig abgesenkten Stellung eine Radarmhöhe der Radarme im Bereich von ca. 85mm aufweisen.

Aufgrund der Kinematik der Hebelanordnung und der Gestänge ist eine Verringerung der Radarmhöhe, um Sonderpaletten mit einer gegenüber Europalatten verringerten Einfahrhöhe handhaben zu können, bei bekannten Flurförderzeugen nicht möglich ohne ein Anstoßen der Gestänge auf der Fahrbahn bzw. der auf den Radarmen aufgenommenen Palette beim Anheben und Absenken zu verhindern.

Der vorliegenden Erfindung liegt die Aufgabe zugrunde, ein Flurförderzeug der eingangs genannten Gattung zur Verfügung zu stellen, das hinsichtlich der Kinematik des Gestänges verbessert ist und eine bauraumsparende Ausführung der Radarme mit einer geringen Radarmhöhe in der abgesenkten Stellung des Lastteils zur Handhabung von Sonderpaletten mit einer geringen Einfahrhöhe ermöglicht.

Diese Aufgabe wird erfindungsgemäß dadurch gelöst, dass die Hebelanordnung einen Zwischenhebel umfasst, der mit einem Koppelpunkt des ersten Hebels und einem weiteren Koppelpunkt des zweiten Hebels verbunden ist. Bei der erfindungsgemäßen Hebelanordnung wird somit das Gestänge über den zweiten Hebel betätigt, der beim Anheben des Lastteils von dem ersten Hebel mittels des Zwischenhebels betätigt und somit verschwenkt wird. Die erfindungsgemäße Hebelanordnung ermöglicht hierbei beim Anheben und Absenken der Radarme eine horizontalen Bewegung des Gestänges ohne störendes Verschwenken, so dass die Bauhöhe der Radarme verringert werden kann und ein Anstoßen der Gestänge auf der Fahrbahn bzw. der auf den Radarmen aufgenommenen Palette beim Anheben und Absenken verhindert werden kann. Mit der erfindungsgemäßen Hebelanordnung kann hierdurch auf einfache Weise die Radarmhöhe in der vollständig abgesenkten Stellung des Lastteils derart verringert werden, dass Sonderplatten mit einer gegenüber Europaletten verringerten Einfahrhöhe für die Radarme gehandhabt werden können.

Gemäß einer bevorzugten Ausführungsform der Erfindung ist das Gestänge als Zugstange ausgebildet. Als Zugstangen ausgebildete Gestänge ermöglichen eine bauraumsparende Kopplung mit den die Lastrollen tragenden schwenkbaren Radarmhebeln in den Radarmen.

Gemäß einer bevorzugten Ausführungsform der Erfindung sind der zweite Lagerpunkt des ersten Hebels und der Lagerpunkt des zweiten Hebels an dem Lastteil in vertikaler Richtung beabstandet angeordnet, wobei der Lagerpunkt des zweiten Hebels oberhalb des zweiten Lagerpunktes des ersten Hebels angeordnet ist. Hierdurch wird eine günstige Kinematik erzielt, die eine horizontale Bewegung des Gestänges ermöglicht und eine Verringerung der Radarmhöhe der Radarme ermöglicht.

Mit besonderem Vorteil ist der erste Hebel als zweiarmiger Hebel ausgebildet, wobei an einem ersten Hebelarm der erste Lagerpunkt und an einem zweiten Hebelarm der Koppelpunkt für den Zwischenhebel ausgebildet ist. Ein derartiger zweiarmiger Hebel kann auf einfache Weise zwischen den beiden Hebelarmen an dem Lastteil schwenkbar gelagert werden, um über den Zwischenhebel den zweiten Hebel zu betätigen.

Mit besonderem Vorteil ist der zweite Hebel als Winkelhebel ausgebildet ist, wobei an einem ersten Hebelarm der Koppelpunkt für das Gestänge und an einem zweiten Hebelarm der Koppelpunkt für den Zwischenhebel ausgebildet ist. Ein derartiger Winkelhebel kann auf einfache Weise an dem Lastteil schwenkbar gelagert werden und ermöglicht über den ersten Hebelarm eine horizontale Bewegung des Gestänges.

Mit besonderem Vorteil ist gemäß einer Ausgestaltungsform der Erfindung der zweite Hebel derart an dem Lastteil angeordnet, dass der Lagerpunkt an dem Lastteil und der Koppelpunkt für den Zwischenhebel in vertikaler Richtung oberhalb des Koppelpunktes für das Gestänge angeordnet. Hierdurch wird eine günstige Kinematik erzielt, die eine Verringerung der Radarmhöhe der Radarme ermöglicht.

Gemäß einer Ausführungsform der Erfindung ist der zweite Hebel derart an dem Lastteil angeordnet, dass der weitere Koppelpunkt des zweiten Hebels für den Zwischenhebel in vertikaler Richtung oberhalb des Koppelpunktes des ersten Hebels für den Zwischenhebel angeordnet ist. Hierdurch wird erzielt, dass die beiden Hebel, die mittels des Zwischenhebels gekoppelt sind, in gegenläufige Richtungen verschwenkt werden, wodurch die als Zugstangen ausgebildeten Gestänge auf einfache Weise betätigt werden können und eine horizontale Bewegung des Gestänges beim Anheben und Absenken der Radarme erzielt wird.

Gemäß einer vorteilhaften Ausführungsform der Erfindung ist bei vollständig abgesenktem Lastteil der Zwischenhebel im Bereich des Koppelpunktes in den ersten Hebel eingetaucht.

Weiterhin weist der Zwischenhebel einen U-förmigen Querschnitt mit einem Ausschnitt auf, in dem der zweite Hebel über den gesamten Hubbereich des Lastteils eingetaucht ist.

Diese Ausführung der beiden Hebel und des Zwischenhebels ergibt in vertikaler Richtung eine ineinander verschachtelte Anordnung der Hebelanordnung mit geringer Bauhöhe in vertikaler Richtung, die eine geringe Bauhöhe der Radarme bei vollständig abgesenktem Lastteil ermöglicht.

Besondere Vorteile ergeben sich, wenn gemäß einer Weiterbildung der Erfindung der Lagerpunkt des zweiten Hebels an dem Lastteil mittels eines Einstellmittels einstellbar ist. Bei einem Flurförderzeug mit zwei Radarmen, deren in den Radarmen angeordneten Lastrollen jeweils mittels einer erfindungsgemäßen Hebelanordnung und eines Gestänges betätigt werden und bei dem die beiden Hebelanordnung nicht miteinander verbunden kann, können mit einem derartigen Einstellmittel auf einfache Weise die Lastrollen an den beiden Radarmen und somit die Radarme auf eine gleiche Höhe eingestellt werden, um ein gleichmäßiges Anheben und Absenken der beiden Radarme zu erzielen und um Bauteiltoleranzen auszugleichen.

Gemäß einer vorteilhaften Ausführungsform der Erfindung ist der Lagerpunkt an einem Lagerbock ausgebildet, der in horizontaler Längsrichtung des Lastteils mittels des Einstellmittels verstellbar ist. Mit einem derartigen, in Längsrichtung des Flurförderzeugs verstellbaren Lagerbock kann auf einfache Weise der Lagerpunkt des zweiten Hebels zur Einstellung der Lastrollen und somit der Radarme verstellt werden.

Zweckmäßigerweise ist der Lagerbock in Langlöchern an einer Bodenplatte des Lastteils verstellbar geführt. Hierdurch ergibt sich für die Verstellung des Lagerbocks ein geringer Herstellaufwand.

Mit besonderem Vorteil ist das Einstellmittel von einer Einstellschraube gebildet, die mit dem Lagerbock und dem Lastteil in Wirkverbindung steht. Mit einer Einstellschraube kann der Lagerbock feinfühlig und genau verstellt werden, um die Radarme einzustellen.

Bei dem erfindungsgemäßen Flurförderzeug weisen gemäß einer bevorzugten Ausführungsform die Radarme in der vollständig abgesenkten Stellung des Lastteils eine Radarmhöhe von unterhalb 50mm auf. Die erfindungsgemäße platzsparende Hebelanordnung ermöglicht durch die Kinematik der als Zugstangen ausgebildeten Gestänge gegenüber bekannten Flurförderzeugen eine deutliche Verringerung der Radarmhöhe der abgesenkten Radarme, so dass mit dem erfindungsgemäßen Flurförderzeug Sonderpaletten, beispielsweise aus Papier oder Pappe bestehende Paletten, mit einer gegenüber Europaletten verringerten Einfahrhöhe mit den Radarmen unterfahren und angehoben werden können.

Die Erfindung betrifft weiterhin ein System bestehend aus einem Flurförderzeug mit einer Radarmhöhe der Radarme in der vollständig abgesenkten Stellung des Lastteils von höchstens 50mm und einer Sonderpalette, die eine Einfahrhöhe für die Radarme des Flurförderzeugs von 50mm aufweist. Mit dem erfindungsgemäßen Flurförderzeug, das aufgrund der erfindungsgemäßen Hebelanordnung mit einer geringen Radarmhöhe der Radarme in der abgesenkten Stellung versehen ist, können Sonderpaletten mit einer geringen Einfahrhöhe sicher und auf einfache Weise gehandhabt werden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer schematischen Darstellung in der abgesenkten Stellung des Lastteils,
- Figur 2: das Flurförderzeug der Figur 1 bei teilweise angehobenem Lastteil,
- Figur 3: das Flurförderzeug der Figuren 1 und 2 bei vollständig angebobenem Lastteil,
- Figur 4: ein erfindungsgemäßes Flurförderzeug mit einer erfindungsgemäßen Hebelanordnung in einem Längsschnitt,
- Figur 5: das Flurförderzeug der Figur 4 in einer perspektivischen Darstellung und
- Figur 6: das Flurförderzeug der Figuren 4 und 5 in einer weiteren perspektivischen Darstellung.

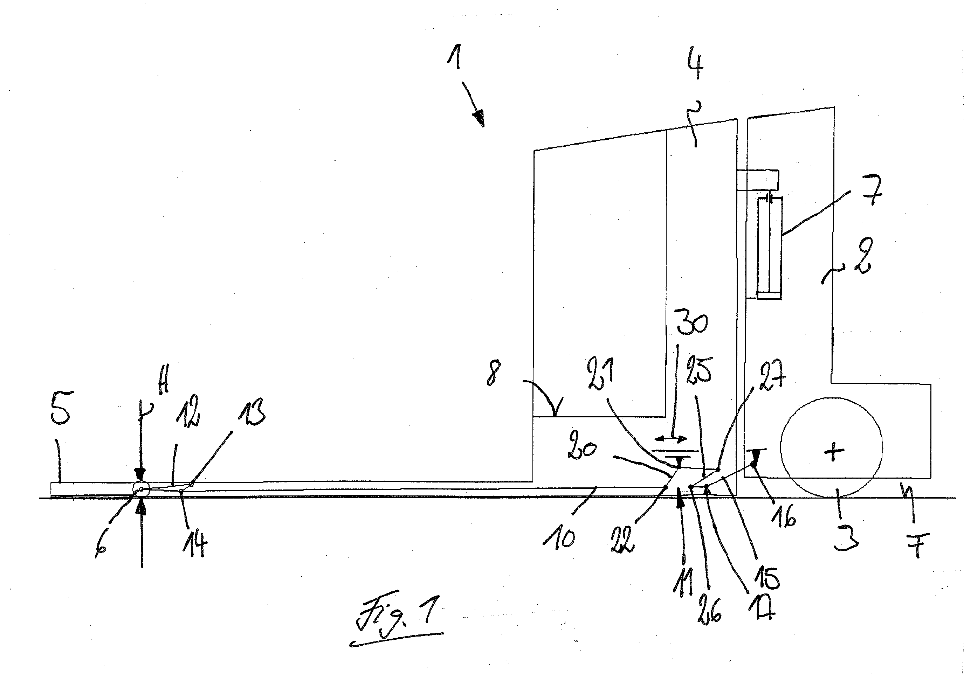

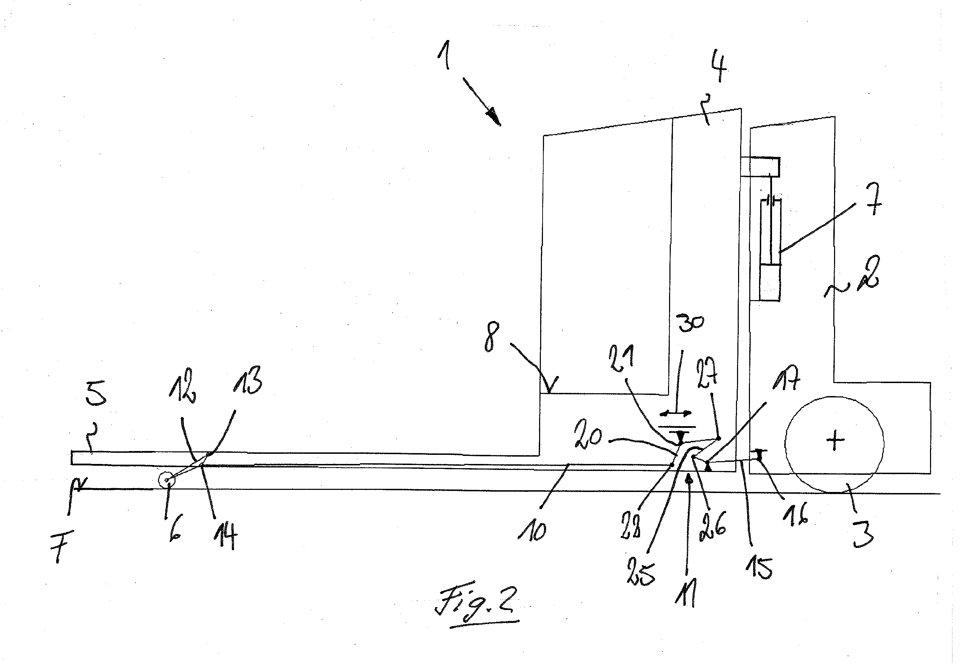

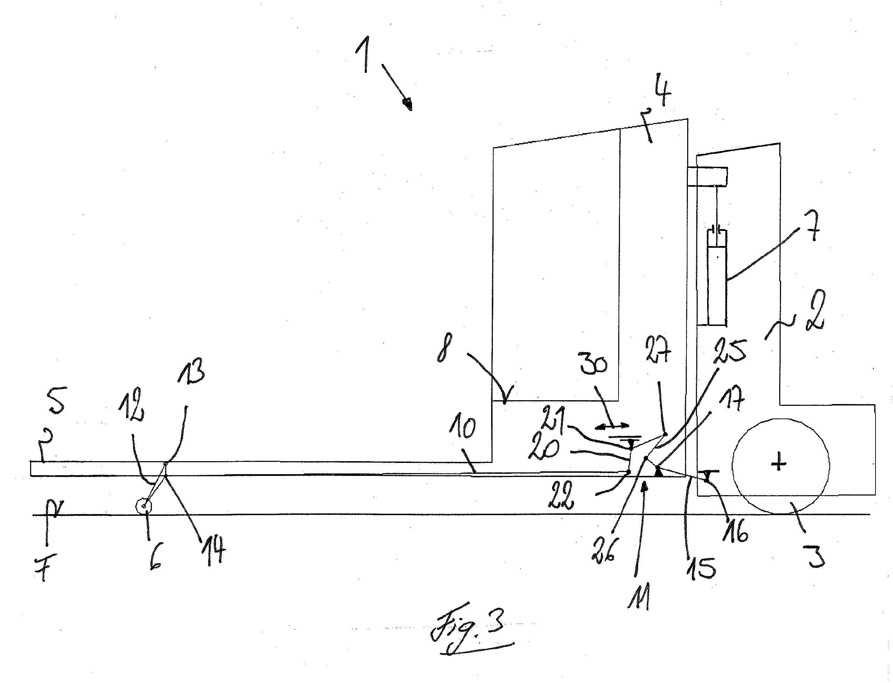

Das in den Figuren 1 bis 3 in einer Seitenansicht dargestellte Flurförderzeug 1, beispielsweise ein als Niederhubwagen oder Hochhubwagen ausgebildeter Hubwagen, weist einen Antriebsteil 2, der mit einem lenkbaren Antriebsrad 3 versehen ist, und einen relativ zum Antriebsteil 2 anhebbaren Lastteil 4 auf. Der Lastteil 4 umfasst bevorzugt zwei seitlich beabstandete Radarme 5, die sich mittels Lastrollen 6 an der Spitze des jeweiligen Radarms 5 auf der Fahrbahn F abstützen. Der Antriebteil 2 ist mittels des Antriebrades 3 auf der Fahrbahn F abgestützt. Zur Erhöhung der Stabilität kann der Antriebsteil 2 mit nicht näher dargestellten Stützrollen auf der Fahrbahn F abgestützt sein.

Zum Anheben des Lastteils ist eine Hubeinrichtung 7, beispielsweise ein oder mehrere Hydraulikzylinder, vorgesehen, die zwischen dem Antriebsteil 2 und dem Lastteil 4 angeordnet ist. Um die Hubbewegung des Lastteils 4 auf die Lastrollen 6 an den Enden der Radarme 5 zu übertragen, ist für jeden Radarm 5 ein mit den Lastrollen 6 in Wirkverbindung stehendes Gestänge 10 und eine das Gestänge 10 betätigende Hebelanordnung 11 vorgesehen. Die Hebelanordnung 11 dient weiterhin als Führung zur Führung des Lastteils 4 bei der Hub- und Senkbewegung.

Das Lastteil 4 kann weiterhin bei einem batterie-elektrisch betriebenen Flurförderzeug 1 ein Batteriefach 8 für eine Traktionsbatterie umfassen, die einen elektrischen Fahrantrieb des Antriebsrades 3 und einen elektrischen Antrieb der Hubeinrichtung 7 mit elektrischer Energie versorgt.

Die Lastrollen 6 sind in Radarmhebeln 12 drehbar angeordnet, die an den Radarmen 5 schwenkbar angeordnet sind. Zur schwenkbaren Lagerung der Radarmhebel 12 in den Radarmen 5 sind Schwenklager 13 vorgesehen. Im dargestellten Ausführungsbeispiel sind die Gestänge 10 als Zugstangen ausgebildet, wobei die Schwenklager 13 im oberen Bereich der Radarme 5 angeordnet sind und die als Zugstangen ausgebildeten Gestänge 10 in vertikaler Richtung unterhalb der Schwenklager 13 mittels Koppelpunkten 14 gelenkig mit den Radarmhebeln 12 verbunden sind.

Die erfindungsgemäße Hebelanordnung 11 zur Betätigung der Gestänge 10 umfasst einen ersten Hebel 15, der mit einem ersten Lagerpunkt 16 an dem Antriebsteil 2 schwenkbar gelagert ist und mit einem zweiten Lagerpunkt 17 an dem Lastteil 3 schwenkbar gelagert ist, und einen zweiten Hebel 20, der mit einem Lagerpunkt 21 an dem Lastteil 4 schwenkbar gelagert ist und mit einem Koppelpunkt 22 mit dem Gestänge 10 gekoppelt ist. Die erfindungsgemäße Hebelanordnung 11 umfasst weiterhin einen Zwischenhebel 25, der mit einem Koppelpunkt 26 des ersten Hebels 15 und einem weiteren Koppelpunkt 27 des zweiten Hebels 20 verbunden ist.

Der erste Hebel 15 ist hierbei als zweiarmiger Hebel ausgebildet, wobei im mittleren Bereich der zweite Lagerpunkt 17 zur gelenkigen Befestigung des Hebels 15 an dem Lastteil 4 ausgebildet ist und an einem sich zu dem Antriebsteil 2 erstreckenden ersten Hebelarm der erste Lagerpunkt 16 zur gelenkigen Befestigung des Hebels 15 an dem Antriebsteil 2 ausgebildet ist. Der erste Hebel 15 ist über den Lagerpunkt 17 hinaus in Richtung zu dem Lastteil 4 verlängert und mit einem zu dem ersten Hebelarm leicht nach vertikal oben gekröpften zweiten Hebelarm versehen, an dem der Koppelpunkt 26 zur gelenkigen Anlenkung des Zwischenhebels 25 ausgebildet ist.

Der zweite Hebel 20 ist als Winkelhebel ausgebildet, der im mittleren Bereich mittels des Lagerpunktes 21 an dem Lastteil 4 schwenkbar gelagert ist. An einem ersten Hebelarm des zweiten Hebels 20 ist der Koppelpunkt 22 zur gelenkigen Anlenkung des Gestänges 10 und an einem zweiten Hebelarm, der sich in Richtung zu dem Antriebteil 2 erstreckt, der Koppelpunkt 27 zur gelenkigen Anlenkung des Zwischenhebels 25 ausgebildet. Der zweite Hebelarm des als Winkelhebel ausgebildeten zweiten Hebels 20 ist bezüglich des ersten Hebelarms nach vertikal unten abgeknickt.

Bei der erfindungsgemäßen Hebelanordnung 11 sind der zweite Lagerpunkt 17 des ersten Hebels 15 und der Lagerpunkt 21 des zweiten Hebels 20 an dem Lastteil 4 in vertikaler Richtung beabstandet angeordnet. Der Lagerpunkt 21 des zweiten Hebels 20 ist hierbei oberhalb des zweiten Lagerpunktes 17 des ersten Hebels 15 angeordnet.

Weiterhin ist bei der erfindungsgemäßen Hebelanordnung 11 der zweite Hebel 20 derart an dem Lastteil 4 angeordnet, dass der Lagerpunkt 21 an dem Lastteil 4 und der Koppelpunkt 27 für den Zwischenhebel 25 in vertikaler Richtung oberhalb des Koppelpunktes 22 für das Gestänge 10 angeordnet sind.

Weiterhin ist der zweite Hebel 20 derart an dem Lastteil 4 angeordnet ist, dass der Koppelpunkt 27 für den Zwischenhebel 25 des zweiten Hebels 20 in vertikaler Richtung oberhalb des Koppelpunktes 26 für den Zwischenhebel 25 des ersten Hebels 15 angeordnet ist.

Um in den beiden Radarmen 5 eine gleichmäßige Hubbewegung der Lastrollen 6 zu erzielen und Bauteiltoleranzen auszugleichen, ist ein Einstellmittel 30 vorgesehen, mit dem der Lagerpunkt 21 des zweiten Hebels 20 in horizontaler Längsrichtung des Lastteils 4 verstellt werden kann.

Bei der erfindungsgemäßen Hebelanordnung 11 verschwenkt beim Anheben des Lastteils 4 - wie in den Figuren 1 bis 3 verdeutlicht ist - der an dem Lagerpunkt 16 an dem Antriebsteil 2 angelenkte erste Hebel 15 im Uhrzeigersinn um den zweiten Lagerpunkt 17 am Lastteil 4, wobei mittels der Zwischenhebels 25 der zweite Hebel 20 im Gegenuhrzeigersinn um den Lagerpunkt 21 am Lastteil 4 verschwenkt wird. Mit der erfindungsgemäßen Hebelanordnung 11 wird hierbei eine reine horizontale Bewegung des als Zugstange ausgebildeten Gestänges 10 erzielt, bei der das als Zugstange ausgebildete Gestänge 10 innerhalb der Höhenerstreckung der Radarme 5 verbleibt.

Die erfindungsgemäße Hebelanordnung 11 mit der erzielbaren horizontalen Bewegung der als Zugstangen ausgebildeten Gestänge 10 ermöglicht es, die Radarme 5 derart in der Bauhöhe zu verringern, dass die Radarme 5 in der vollständig abgesenkten Stellung des Lastteils 4 eine Radarmhöhe H von weniger als 50mm aufweisen, so dass mit dem erfindungsgemäßen Flurförderzeug 1 Sonderpaletten gehandhabt werden können, die eine Einfahrhöhe für die Radarme 5 von 50mm aufweisen.

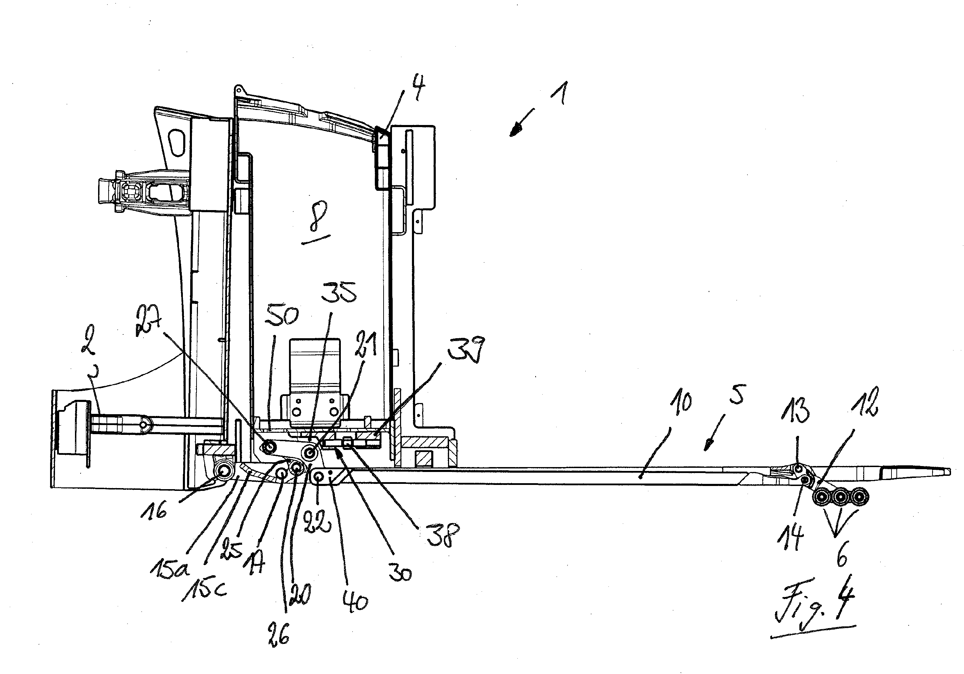

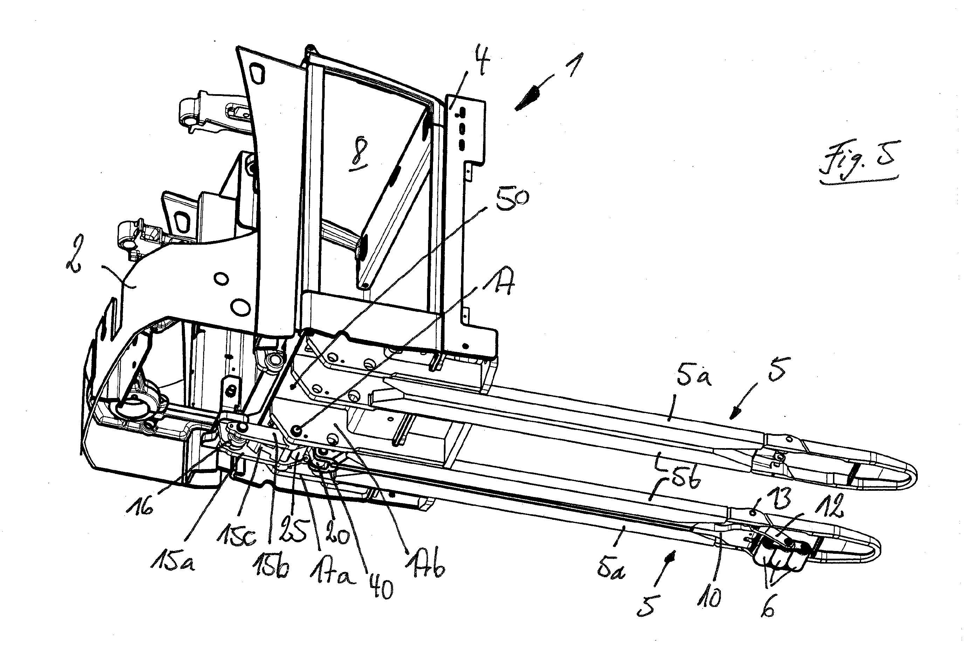

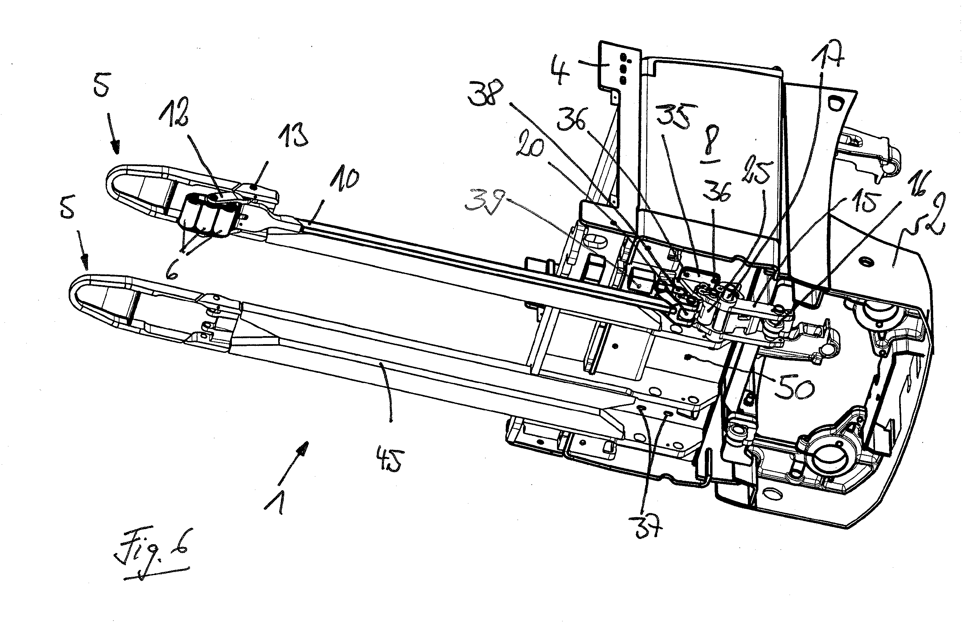

In den Figuren 4 bis 6 ist eine konstruktive Ausführung des Flurförderzeugs 1 der Figuren 1 bis 3 dargestellt.

Die Figuren 4 bis 6 zeigen den Zustand mit vollständig angehobenem Lastteil 4.

Der Lagerpunkt 16 des ersten Hebels 15 an dem Antriebsteil 2 ist von einem Lagerauge gebildet, in dem der erste Hebel 15 mittels eines Lagerbolzens gelagert ist.

Der erste Hebel 15 ist von zwei in Fahrzeugquerrichtung beabstandeten Seitenplatten 15a, 15b und einer Versteifungsplatte 15c gebildet. Der Lagerpunkt 17 des ersten Hebels 15 an dem Lastteil 4 ist von zwei in Fahrzeugquerrichtung beabstandeten Seitenplatten 17a, 17b gebildet, zwischen denen der erste Hebel 15 mittels eines Lagerbolzens schwenkbar gelagert ist. Die Seitenplatten 17a, 17b sind hierbei an der Unterseite einer Bodenplatte 50 des Batteriefachs 8 angeordnet.

Der Zwischenhebel 25 ist als gebogene, im Querschnitt U-förmigen Lasche ausgebildet, die mittels Lagerbolzen an dem ersten Hebel 15 und dem zweiten Hebel 20 schwenkbar befestigt ist, die die Koppelpunkte 26, 27 bilden. Der Zwischenhebel 25 ist zwischen den Seitenplatten 15a, 15b des ersten Hebels 15 angeordnet. Der laschenförmige Zwischenhebel 25 ist von zwei in Fahrzeugquerrichtung beabstandeten Seitenplatten und einem die Seitenplatten verbindenden, rohrförmigen Verbindungsstück gebildet. Das rohrförmige Verbindungsstück ist zwischen den Seitenplatten 15a, 15b des ersten Hebels 15 angeordnet und nimmt den Lagerbolzen auf, der den Koppelpunkt 26 zur gelenkigen Anlenkung des Zwischenhebels 25 an dem ersten Hebel 15 bildet und hierzu in den Seitenplatten 15a, 15b des ersten Hebels 15 aufgenommen ist.

Der zweite Hebel 20 ist als winkelhebelartige Lasche ausgebildet, wobei der zweite Hebelarm, der sich in Richtung zu dem Antriebteil 2 erstreckt und an dem der von dem Lagerbolzen gebildete Koppelpunkt 27 ausgebildet ist, mittig zwischen den beiden Seitenplatten des Zwischenhebels 25 und dem von den Seitenplatten des Zwischenhebels 25 gebildeten U-förmigen Ausschnitt angeordnet ist. Der den Koppelpunkt 27 bildenden Lagerbolzen ist hierbei in den beiden Seitenplatten des Zwischenhebels 25 und dem Hebel 20 aufgenommen.

Bei einer Hubbewegung des Lastteils 4 sind über den gesamten Hubbereich die Hebel 15, 20 und der Zwischenhebel 25 in vertikaler Richtung ineinander verschachtelt angeordnet, so dass eine geringe Bauhöhe der Radarme 5 bei vollständig abgesenktem Lastteil 4 erzielt wird. Im vollständig abgesenkten Zustand des Lastteils 4 ist der Zwischenhebel 25 mit dem Koppelpunkt 27 maximal im Bereich der Versteifungsplatte 15c in den ersten Hebel 15 eingetaucht. Der zweite Hebel 20 ist über den gesamten Hubbereich des Lastteils 4 in dem von den beiden Seitenplatten des Zwischenhebels 25 gebildeten Ausschnitt eingetaucht. Beim Anheben taucht der Zwischenhebel 25 mit dem Koppelpunkt 27 aus dem ersten Hebel 15 aus und der zwischen den Seitenplatten des Zwischenhebels 25 angeordnete zweite Hebel 20 taucht weiter in den von den beiden Seitenplatten des Zwischenhebels 25 gebildeten U-förmigen Ausschnitt des Zwischenhebels 25 ein. Hierdurch wird eine geringer Bauhöhe der Hebel 15, 20 und des Zwischenhebels 25 und somit eine geringe Höhe der Radarme 5 in der vollständig abgesenkten Stellung des Lastteils 4 erzielt und beim Anheben des Lastteils 4 die gegensinnige Schwenkbewegung der beiden Hebel 15, 25 ermöglicht.

Der Lagerpunkt 21 des zweiten Hebels 20 an dem Lastteil 4 ist an einem Lagerbock 35 ausgebildet, an dem der zweite Hebel 20 mittels eines Lagerbolzens schwenkbar gelagert ist. Der Lagerbock 35 ist an der Unterseite der Bodenplatte 50 des Batteriefachs mittels mehreren Verschraubungen 36 befestigt, die in Langlöchern 37 der Bodenplatte 50 angeordnet sind. Die Langlöcher 37 erstrecken sich in Fahrzeuglängsrichtung, so dass der Lagerbock 35 und somit der Lagerpunkt 21 des zweiten Hebels 20 in Fahrzeugslängsrichtung verstellbar ist.

Zur Verstellung des Lagerpunktes 21 ist ein als Einstellschraube 38 ausgebildetes Einstellmittel 30 vorgesehen, das mit dem Lagerbock 35 und einem an der Bodenplatte 50 befestigten Widerlager 39 in Verbindung steht.

Die als Zugstangen ausgebildete Gestänge 10 sind zur gelenkigen Verbindung mit dem zweiten Hebel 20 mit einer Lagergabel 40 versehen, die mittels einer Lagerbolzens an dem Koppelpunkt 22 des zweiten Hebels 20 schwenkbar gelagert sind.

Im Bereich der Radarmhebel 12 ist die entsprechende Zugstange mittels eines Lagerbolzens an dem Koppelpunkt 14 mit dem Radarmhebel 12 gelenkig verbunden.

Die Radarme 5 weisen jeweils zwei seitlich beabstandeten Längsträger 5a, 5b auf, zwischen denen ein Aufnahmekanal 45 für das Gestänge 10 ausgebildet ist.

## Patentansprüche

1. Flurförderzeug (1), insbesondere Hubwagen, mit einem Antriebsteil (2) und einem relativ zum Antriebsteil (2) anhebbaren Lastteil (4), wobei der Lastteil (4) zumindest einen Radarm (5) aufweist, der mit mindestens einer Lastrolle (6) versehen ist, wobei zum Anheben des Radarms (5) ein mit der Lastrolle (6) in Wirkverbindung stehendes Gestänge (10) und eine das Gestänge (10) betätigende Hebelanordnung (11) vorgesehen ist, wobei die Hebelanordnung (11) einen ersten Hebel (15), der mit einem ersten Lagerpunkt (16) an dem Antriebsteil (2) schwenkbar gelagert ist und mit einem zweiten Lagerpunkt (17) an dem Lastteil (4) schwenkbar gelagert ist, und einen zweiten Hebel (20) aufweist, der mit einem Lagerpunkt (21) an dem Lastteil (4) schwenkbar gelagert ist und mit einem Koppelpunkt (22) mit dem Gestänge (10) gekoppelt ist, **dadurch gekennzeichnet, dass** die Hebelanordnung (11) einen Zwischenhebel (25) umfasst, der mit einem Koppelpunkt (26) des ersten Hebels (15) und einem weiteren Koppelpunkt (27) des zweiten Hebels (20) verbunden ist.

2. Flurförderzeug nach Anspruch 1, **dadurch gekennzeichnet, dass** das Gestänge (10) als Zugstange ausgebildet ist.

3. Flurförderzeug nach Anspruch 1 oder 2, **dadurch gekennzeichnet, dass** der zweite Lagerpunkt (17) des ersten Hebels (15) und der Lagerpunkt (21) des zweiten Hebels (20) an dem Lastteil (4) in vertikaler Richtung beabstandet angeordnet sind, wobei der Lagerpunkt (21) des zweiten Hebels (20) oberhalb des zweiten Lagerpunktes (17) des ersten Hebels (15) angeordnet ist.

4. Flurförderzeug nach einem der Ansprüche 1 bis 3, **dadurch gekennzeichnet, dass** der erste Hebel (15) als zweiarmiger Hebel ausgebildet ist, wobei an einem ersten Hebelarm der erste Lagerpunkt (16) und an einem zweiten Hebelarm der Koppelpunkt (26) für den Zwischenhebel (25) ausgebildet ist.

5. Flurförderzeug nach einem der Ansprüche 1 bis 4, **dadurch gekennzeichnet, dass** der zweite Hebel (20) als Winkelhebel ausgebildet ist, wobei an einem ersten Hebelarm der Koppelpunkt (22) für das Gestänge (10) und an einem zweiten Hebelarm der Koppelpunkt (27) für den Zwischenhebel (25) ausgebildet ist.

6. Flurförderzeug nach einem der Ansprüche 1 bis 5, **dadurch gekennzeichnet, dass** der zweite Hebel (20) derart an dem Lastteil (4) angeordnet ist, dass der Lagerpunkt (21) an dem Lastteil (4) und der Koppelpunkt (27) für den Zwischenhebel (25) in vertikaler Richtung oberhalb des Koppelpunktes (22) für das Gestänge (10) angeordnet sind.

7. Flurförderzeug nach einem der Ansprüche 1 bis 6, **dadurch gekennzeichnet, dass** der zweite Hebel (20) derart an dem Lastteil (4) angeordnet ist, dass der weitere Koppelpunkt (27) des zweiten Hebels (20) für den Zwischenhebel (25) in vertikaler Richtung oberhalb des Koppelpunktes (26) des ersten Hebels (15) für den Zwischenhebel (25) angeordnet ist.

8. Flurförderzeug nach einem der Ansprüche 1 bis 7, **dadurch gekennzeichnet, dass** bei vollständig abgesenktem Lastteil (4) der Zwischenhebel (25) im Bereich des Koppelpunktes (27) in den ersten Hebel (15) eingetaucht ist.

9. Flurförderzeug nach einem der Ansprüche 1 bis 8, **dadurch gekennzeichnet, dass** der Zwischenhebel (25) einen U-förmigen Querschnitt mit einem Ausschnitt aufweist, in dem der zweite Hebel (20) über den gesamten Hubbereich des Lastteils (4) eingetaucht ist.

10. Flurförderzeug nach einem der Ansprüche 1 bis 9, **dadurch gekennzeichnet, dass** der Lagerpunkt (21) des zweiten Hebels (20) an dem Lastteil (4) mittels eines Einstellmittels (30) einstellbar ist.

11. Flurförderzeug nach Anspruch 10, **dadurch gekennzeichnet, dass** der Lagerpunkt (21) an einem Lagerbock (35) ausgebildet ist, der in horizontaler Längsrichtung des Lastteils (4) mittels des Einstellmittels (30) verstellbar ist.

12. Flurförderzeug nach Anspruch 10 oder 11, **dadurch gekennzeichnet, dass** der Lagerbock (35) in Langlöchern (37) an einer Bodenplatte (50) des Lastteils (4) verstellbar geführt ist.

13. Flurförderzeug nach einem der Ansprüche 10 bis 12, **dadurch gekennzeichnet, dass** das Einstellmittel (30) von einer Einstellschraube (38) gebildet ist, die mit dem Lagerbock (35) und dem Lastteil (4) in Wirkverbindung steht.

14. Flurförderzeug nach einem der Ansprüche 1 bis 13, **dadurch gekennzeichnet, dass** die Radarme (5) in der vollständig abgesenkten Stellung des Lastteils (4) eine Radarmhöhe (H) von unterhalb 50mm aufweisen.

15. System bestehend aus einem Flurförderzeug nach einem der vorangegangenen Ansprüche mit einer Radarmhöhe (H) der Radarme (5) in der vollständig abgesenkten Stellung des Lastteils (4) von höchstens 50mm und einer Sonderpalette, die eine Einfahrhöhe für die Radarme (5) des Flurförderzeugs (1) von 50mm aufweist.

## Claims

1. Industrial truck (1), in particular pallet truck, with a drive part (2) and a load part (4) that can be raised relative to the drive part (2), wherein the load part (4) has at least one wheel arm (5), which is provided with at least one load roller (6), wherein, in order to raise the wheel arm (5), a linkage (10), which is operatively connected to the load roller (6), and a lever arrangement (11) actuating the linkage (10) are provided, wherein the lever arrangement (11) has a first lever (15), which is borne pivotably on the drive part (2) with a first bearing point (16) and is borne pivotably on the load part (4) with a second bearing point (17), and a second lever (20), which is borne pivotably on the load part (4) with a bearing point (21) and is coupled to the linkage (10) with a coupling point (22), **characterized in that** the lever arrangement (11) comprises an intermediate lever (25), which is connected to a coupling point (26) of the first lever (15) and a further coupling point (27) of the second lever (20).

2. Industrial truck according to Claim 1, **characterized in that** the linkage (10) is in the form of a tie rod.

3. Industrial truck according to Claim 1 or 2, **characterized in that** the second bearing point (17) of the first lever (15) and the bearing point (21) of the second lever (20) are arranged spaced apart in the vertical direction on the load part (4), wherein the bearing point (21) of the second lever (20) is arranged above the second bearing point (17) of the first lever (15).

4. Industrial truck according to one of Claims 1 to 3, **characterized in that** the first lever (15) is in the form of a two-armed lever, wherein the first bearing point (16) is formed on a first lever arm and the coupling point (26) for the intermediate lever (25) is formed on a second lever arm.

5. Industrial truck according to one of Claims 1 to 4, **characterized in that** the second lever (20) is in the form of an angled lever, wherein the coupling point (22) for the linkage (10) is formed on a first lever arm and the coupling point (27) for the intermediate lever (25) is formed on a second lever arm.

6. Industrial truck according to one of Claims 1 to 5, **characterized in that** the second lever (20) is arranged on the load part (4) in such a way that the bearing point (21) is arranged on the load part (4) and the coupling point (27) for the intermediate lever (25) is arranged in the vertical direction above the coupling point (22) for the linkage (10).

7. Industrial truck according to one of Claims 1 to 6, **characterized in that** the second lever (20) is arranged on the load part (4) in such a way that the further coupling point (27) of the second lever (20) for the intermediate lever (25) is arranged in the vertical direction above the coupling point (26) of the first lever (15) for the intermediate lever (25).

8. Industrial truck according to one of Claims 1 to 7, **characterized in that** with the load part (4) completely lowered, the intermediate lever (25) is introduced into the first lever (15) in the region of the coupling point (27).

9. Industrial truck according to one of Claims 1 to 8, **characterized in that** the intermediate lever (25) has a U-shaped cross section having a cutout in which the second lever (20) is introduced over the entire lifting range of the load part (4).

10. Industrial truck according to one of Claims 1 to 9, **characterized in that** the bearing point (21) of the second lever (20) on the load part (4) is adjustable by means of an adjustment means (30).

11. Industrial truck according to Claim 10, **characterized in that** the bearing point (21) is formed on a bearing block (35), which is adjustable in the horizontal longitudinal direction of the load part (4) by means of the adjustment means (30).

12. Industrial truck according to Claim 10 or 11, **characterized in that** the bearing block (35) is guided adjustably in slots (37) in a base plate (50) of the load part (4).

13. Industrial truck according to one of Claims 10 to 12, **characterized in that** the adjustment means (30) is formed by an adjustment screw (38), which is operatively connected to the bearing block (35) and the load part (4).

14. Industrial truck according to one of Claims 1 to 13, **characterized in that** the wheel arms (5), in the completely lowered position of the load part (4), have a wheel arm height (H) of below 50 mm.

15. System comprising an industrial truck according to one of the preceding claims with a wheel arm height (H) of the wheel arms (5) in the completely lowered position of the load part (4) of at most 50 mm and a non-standard pallet, which has an entry height for the wheel arms (5) of the industrial truck (1) of 50 mm.

## Revendications

1. Chariot de manutention (1), en particulier chariot élévateur, comprenant une partie d'entraînement (2) et une partie de charge (4) pouvant être soulevée par rapport à la partie d'entraînement (2), la partie de charge (4) présentant au moins un bras de roue (5) qui est muni d'au moins un rouleau de charge (6), une tringlerie (10) en liaison fonctionnelle avec le rouleau de charge (6) et un agencement de levier (11) actionnant la tringlerie (10) étant prévus pour le soulèvement du bras de roue (5), l'agencement de levier (11) présentant un premier levier (15) qui est supporté de manière pivotante par un premier point de palier (16) au niveau de la partie d'entraînement (2) et par un deuxième point de palier (17) au niveau de la partie de charge (4), et un deuxième levier (20) qui est supporté de manière pivotante par un point de palier (21) sur la partie de charge (4) et qui est accouplé à la tringlerie (10) par un point d'accouplement (22), **caractérisé en ce que** l'agencement de levier (11) comprend un levier intermédiaire (25) qui est connecté à un point d'accouplement (26) du premier levier (15) et à un point d'accouplement supplémentaire (27) du deuxième levier (20).

2. Chariot de manutention selon la revendication 1, **caractérisé en ce que** la tringlerie (10) est réalisée sous forme de barre de traction.

3. Chariot de manutention selon la revendication 1 ou 2, **caractérisé en ce que** le deuxième point de palier (17) du premier levier (15) et le point de palier (21) du deuxième levier (20) sont disposés de manière espacée dans la direction verticale sur la partie de charge (4), le point de palier (21) du deuxième levier (20) étant disposé au-dessus du deuxième point de palier (17) du premier levier (15).

4. Chariot de manutention selon l'une quelconque des revendications 1 à 3, **caractérisé en ce que** le premier levier (15) est réalisé sous forme de levier à deux bras, le premier point de palier (16) étant réalisé au niveau d'un premier bras de levier et le point d'accouplement (26) pour le levier intermédiaire (25) étant réalisé au niveau d'un deuxième bras de levier.

5. Chariot de manutention selon l'une quelconque des revendications 1 à 4, **caractérisé en ce que** le deuxième levier (20) est réalisé sous forme de levier coudé, le point d'accouplement (22) pour la tringlerie (10) étant réalisé au niveau d'un premier bras de levier et le point d'accouplement (27) pour le levier intermédiaire (25) étant réalisé au niveau d'un deuxième bras de levier.

6. Chariot de manutention selon l'une quelconque des revendications 1 à 5, **caractérisé en ce que** le deuxième levier (20) est disposé au niveau de la partie de charge (4) de telle sorte que le point de palier (21) soit disposé au niveau de la partie de charge (4) et que le point d'accouplement (27) pour le levier intermédiaire (25) soit disposé dans la direction verticale au-dessus du point d'accouplement (22) pour la tringlerie (10).

7. Chariot de manutention selon l'une quelconque des revendications 1 à 6, **caractérisé en ce que** le deuxième levier (20) est disposé au niveau de la partie de charge (4) de telle sorte que le point d'accouplement supplémentaire (27) du deuxième levier (20) pour le levier intermédiaire (25) soit disposé dans la direction verticale au-dessus du point d'accouplement (26) du premier levier (15) pour le levier intermédiaire (25).

8. Chariot de manutention selon l'une quelconque des revendications 1 à 7, **caractérisé en ce que** lorsque la partie de charge (4) est complètement abaissée, le levier intermédiaire (25) est plongé dans la région du point d'accouplement (27) dans le premier levier (15).

9. Chariot de manutention selon l'une quelconque des revendications 1 à 8, **caractérisé en ce que** le levier intermédiaire (25) présente une section transversale en forme de U avec un évidement dans lequel le deuxième levier (20) est plongé sur toute la plage de levage de la partie de charge (4).

10. Chariot de manutention selon l'une quelconque des revendications 1 à 9, **caractérisé en ce que** le point de palier (21) du deuxième levier (20) au niveau de la partie de charge (4) peut être ajusté au moyen d'un moyen d'ajustement (30).

11. Chariot de manutention selon la revendication 10, **caractérisé en ce que** le point de palier (21) est réalisé au niveau d'un coussinet (35) qui peut être réglé dans la direction longitudinale horizontale de la partie de charge (4) au moyen du moyen d'ajustement (30).

12. Chariot de manutention selon la revendication 10 ou 11, **caractérisé en ce que** le coussinet (35) est guidé de manière réglable dans des trous oblongs (37) au niveau d'une plaque de fond (50) de la partie de charge (4).

13. Chariot de manutention selon l'une quelconque des revendications 10 à 12, **caractérisé en ce que** le moyen d'ajustement (30) est formé par une vis d'ajustement (38) qui est en liaison fonctionnelle avec le coussinet (35) et la partie de charge (4).

14. Chariot de manutention selon l'une quelconque des revendications 1 à 13, **caractérisé en ce que** les bras de roue (5), dans la position complètement abaissée de la partie de charge (4), présentent une hauteur de bras de roue (H) inférieure à 50 mm.

15. Système constitué d'un chariot de manutention selon l'une quelconque des revendications précédentes, comprenant une hauteur de bras de roue (H) des bras de roue (5) dans la position complètement abaissée de la partie de charge (4) de 50 mm au maximum et une palette séparée qui présente une hauteur d'introduction pour les bras de roue (5) du chariot de manutention (1) de 50 mm.
